# EUROPEAN PATENT APPLICATION

(11) **EP 1 149 959 A1**
(43) Date of publication of application: **31.10.2001**
(21) Application number: 01201515.2
(22) Date of filing: 25.04.2001
(51) Int. Cl.: E04B 7/22, E04C 2/296, B29C 44/32, E04D 3/35

(54) **Insulating plate**

(30) Priority: 25.04.2000 NL 1015075
(71) Applicant: Ecotherm Beheer B.V., 7102 JH Winterswijk (NL)
(72) Inventor: Wieskamp, Gerrit, 7101 PD Winterswijk (NL); Jetten, Frederik Rudolf, 7103 WH Winterswijk (NL); Koppelmann, Harold Kuno, 40882 Rattingen (DE)
(74) Representative: Prins, Adrianus Willem

(57) **Abstract**

Insulating plate having a core (2) of foamed material which is provided on at least one side with a covering layer (3) which is directly connected with the core (2) and which extends beyond a side edge portion (6) of the core (2), the core (2) being provided, in an area (11) adjacent the side edge portion (6, 6'), with an intermediate layer (8) not bonded to the covering layer (3), while the intermediate layer (8) is formed by a strip of sheetlike material provided on the foamed material.

## Description

This invention relates to an insulating plate with a core of foamed material which is provided on at least one side with a covering layer.

Such insulating plates are known from practice; they are provided on both sides with a covering layer which is waterproof and, if desired, also vapor-permeable. These insulating plates are used for insulating roofs and floors.

A disadvantage of the known insulating plates is that when plates are laid side by side, a seam is formed there where the plates butt. Through this seam, moisture, such as, for instance, condensate, and/or dirt, such as dust, can penetrate between the plates. To prevent such penetration of undesired matter, in the known plates, after they have been fitted, the seams formed between the plates are taped up, for instance by means of (adhesive) tape. A disadvantage involved is that applying the tape requires high precision and is time consuming. In addition, the (adhesive) tape in turn forms an edge on the surface of the fitted plates, on which moisture may collect, for instance in case of inclined plates along which runs moisture of condensation.

The object of the invention is to provide an insulating plate whereby, in a simple and effective manner, the penetration of moisture and dirt into the seams between fitted plates is avoided.

To that end, the invention provides an insulating plate of the type indicated hereinabove, which is characterized in that the covering layer extends beyond a side edge portion of the core. In fitted condition of the insulating plate, the projecting part of the covering layer extends over the seam formed with the adjacent insulating plate. Thus, the seam between the adjacent insulating plates is closed off to penetrating dirt and moisture. As the projecting edge is part of the covering layer, coverage of the seam, when fitting the plates, can be effected simply and fast.

The invention further provides a method for manufacturing an insulating plate according to the invention.

The invention will be further elucidated on the basis of a detailed description of an exemplary embodiment of the invention, with reference to the drawings. In the drawings:
Fig. 1 shows, in perspective, an insulating plate according to the invention,
Fig. 2 shows a side elevation of a part of the insulating plate from Fig. 1,
Fig. 3 shows a side elevation of a part of the insulating plate from Fig. 1 in non-fitted condition,
Fig. 4 shows a schematic side elevation of an apparatus for manufacturing insulating plate,
Fig. 5 shows a top plan view of the apparatus from Fig. 4, and
Fig. 6 shows a side elevation of a part of the insulating plate in unfinished condition.

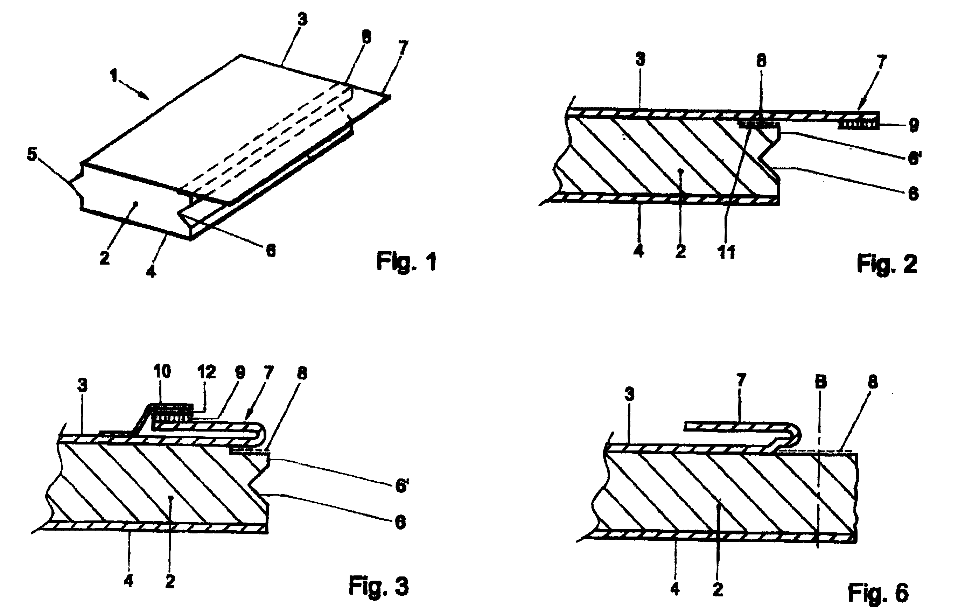

Fig. 1 shows, in perspective, an exemplary embodiment of an insulating plate 1 according to the invention. The insulating plate 1 shown has a core 2 of a foam material, such as, for instance, polyurethane foam. The plate 1 is provided, at the top, with a covering layer 3, which, in this example, is formed by a waterproof, windproof and vapor-permeable membrane. At the underside, the plate 1 is provided with a covering layer 4, which, in this example, is formed by the same material as the covering layer 3, and therefore is likewise waterproof, windproof and vapor-permeable. Incidentally, the invention is not limited to this embodiment of the covering layers; the invention further provides the use of other suitable covering layers such as, for instance, waterproof and airtight covering layers. The covering layers 3 and 4 in this example are applied directly to the core 2, without interposition of any other layers.

A first longitudinal side of the plate 1 is provided with a tongue 5, and the opposite, second longitudinal side of the plate 1 is provided with a groove 6. The tongue 5 and the groove 6 are so shaped that they can be mutually coupled if two identical plates 1 are laid side by side. The groove and tongue can be designed in any desired manner; in addition, the invention can also be carried out without groove and tongue, that is, with straight or beveled longitudinal sides.

In Fig. 2 the longitudinal side 6 of the plate 1 is shown in more detail. The covering layer 3 extends beyond the extreme edge 6' of the longitudinal side; the projecting part of the covering layer 3 is designated as a flap 7. Between the core 2 and the covering layer 3, in a strip-shaped area 11 along the side edge 6' of the plate 1, an intermediate layer 8 is provided on the core 2. The intermediate layer 8 is so designed that the covering layer 3 does not adhere to the intermediate layer 8. In this example, the intermediate layer 8 is formed by a strip of sheetlike material, such as a strip of paper, which adheres to the core 2 but not to the covering layer 3. The invention is not limited to this embodiment of the intermediate layer; according to the invention, other suitable intermediate layers can be used, such as, for instance, films. Also, the invention provides an intermediate layer which is formed by locally changing the surface properties of the core, such that a surface not adhering to the covering layer is obtained.

Further, along the free edge of the flap 7, an adhesive layer 9 is provided, applied to the flap 7 on the side proximal to the core 2, as shown in Fig. 2.

For storage and transport of the insulating plate 1, the flap 7 is folded back, as shown in Fig. 3. The fold line of the flap 7 is situated slightly before the end 6' of the edge of the core 2. The adhesive layer 9 is provided with a protective layer 12, designed, for instance, as a smooth paper strip. The flap 7, when folded back, is retained on the insulating plate 1 by means of a strip of adhesive tape 10, which is applied over the protective layer 12 of the adhesive layer 9 and the covering layer 3. The adhesive tape 10 is designed such that, on the one hand, it adheres properly to the covering layer 3, and, on the other, can be removed again without damage to the covering layer 3.

Prior to use, first the insulating plates needed are fitted in the desired position, such that the grooves and tongues are in mutual engagement. Then the strips of adhesive tape 10 are removed, and the protective layer 12 of the adhesive layer 9 is removed, so that the adhesive layer 9 is exposed. Next, the respective flaps 7 are folded back into the position as shown in Fig. 2. The adhesive layer 9 is then situated above the covering layer surface of the adjacent plate, and by exerting some pressure on the flap 7 adjacent the adhesive layer 9, the flap is bonded with the adjacent insulating plate. The seam between the adjacent insulating plates is thereby closed off to penetrating dirt and moisture. Owing to the plate in this exemplary embodiment having an identical top and bottom layer, the plates can, if desired, be placed upside down.

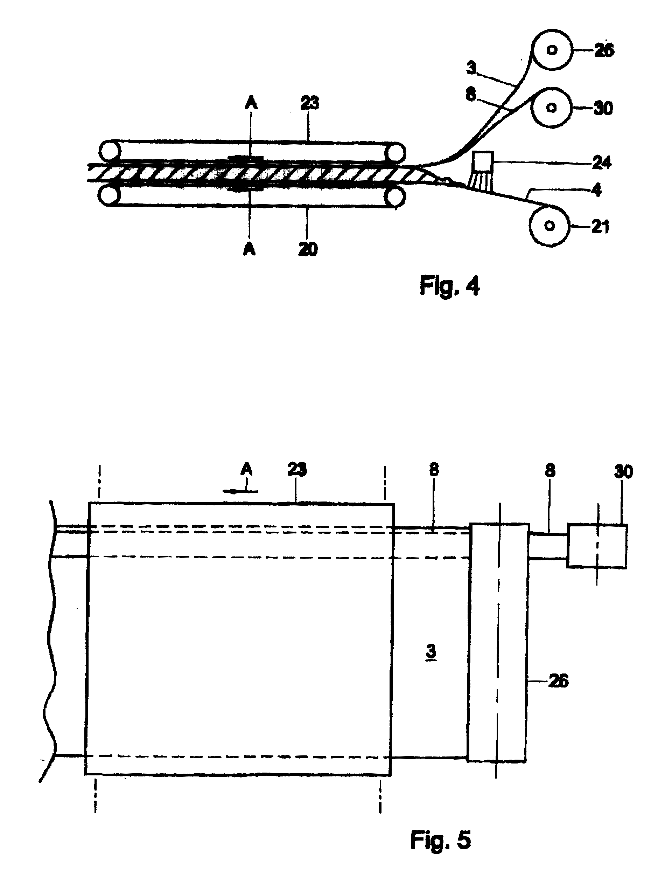

Figs. 4 and 5 schematically show how an insulating plate according to the invention can be manufactured. To a substantially horizontal conveyor 20, there is supplied a carrier 4 from a supply roll 21. In this example, the carrier 4, like the covering layer 3 to be mentioned hereinafter, is made of a waterproof and vapor-permeable material, as already mentioned above. Above the first conveyor 20, a second conveyor 23 is arranged. Before the carrier 4 reaches the area under the second conveyor, a foaming material, such as, for instance, polyurethane, is sprayed directly onto the carrier 4 by means of a spraying installation 24. The foaming material proceeds to foam, whilst the carrier travels in the direction indicated by the arrow A. Foaming at the top is limited in a known manner by the second conveyor, so that a plate of uniform thickness is obtained.

During the initial stage of the foaming process, from a supply roll 26, a covering layer 3 is supplied to the foaming material, at the top. Between the foaming material and the covering layer, further, adjacent a peripheral part of the covering layer 3, a strip of protective material 8, such as, for instance, paper, is supplied from a supply roll 30. The protective material adheres to the foaming material, but not to the covering layer 3. As a result, the covering layer 3 adheres directly to the core of foam material, except adjacent the protective material. As the core is directly applied to the waterproof and vapor-permeable covering layers 3 and 4, the insulating plate, insofar as the covering layers are concerned, is directly applicable, and no costly additional layers need to be provided to obtain waterproofness and vapor permeability.

The thus formed insulating plate, after it has left the conveyors, is sawn to length, transversely to the direction of transport A, to form plates of a particular length. Fig. 6 shows an edge portion of an insulating plate not finished yet. For finishing the edge, first the part 7 of the covering layer 3 that does not adhere to the core 2 is folded back, and subsequently, by means of a suitable milling or sawing operation, the material of the insulating plate 1 that is not needed is removed along the line B. If desired, a groove and tongue, respectively, can here be provided, for instance by milling. When finishing the sides, at the same time, peripheral strips of the carrier, the protective strip and the covering layer are removed, with the exception of a folded-back peripheral strip of the covering layer situated above and adjacent to the protective strip 8. Thereafter, the adhesive layer 9 and the adhesive strip 10 are applied, yielding the situation as depicted in Fig. 3.

In a further variant embodiment according to the invention, not shown, the steps of folding over of the flap 7 and applying the adhesive layer 9 and the adhesive strip 10 are carried out in line with the foaming of the plate. Thus, the plate according to the invention can be formed in a simple and fast manner.

The covering layer as supplied can be wider than the carrier. It is also possible, however, that the carrier as supplied and the covering layer as supplied are equally wide and that the flap 7 is formed simply in that the peripheral strip of the covering layer is not cut off along the respective edge, but is cut off at the other edges of the insulating plate.

The invention is not limited to the manner mentioned by way of example here, of applying an intermediate layer not adhering to the covering layer, to the core of the insulating plate. Thus, for instance, alternatively, the covering layer could be moistened just before being applied in the area where no adhesion to the core is desired; moistening then prevents adhesion to the core.

Although in the foregoing exemplary embodiment a single projecting flap has been shown, the invention is not limited thereto and the invention further provides the use of several flaps. According to the invention, a flap can also be arranged at the bottom covering layer.

## Claims

1. An insulating plate having a core (2) of foamed material which is provided on at least one side with a covering layer (3) which is directly connected with the core (2), **characterized in that** the covering layer (3) extends beyond a side edge portion (6, 6') of the core (2).

2. An insulating plate according to claim 1, **characterized in that** the core (2), in an area (11) adjacent the side edge portion (6, 6'), is provided with an intermediate layer (8) which is not bonded to the covering layer (3).

3. An insulating plate according to claim 2, wherein the intermediate layer (8) is formed by a strip of sheetlike material provided on the foamed material.

4. An insulating plate according to any one of the preceding claims, **characterized in that** the part (7) of the covering layer (3) extending beyond the side edge portion (6, 6') of the core (2) is provided with an adhesive layer (9) on the side proximal to the core (2).

5. An insulating plate according to claim 4, **characterized in that** the adhesive layer (9) is provided with a protective layer (12).

6. An insulating plate according to any one of the preceding claims, **characterized in that** in transport and storage condition, the part (7) of the covering layer (3) extending beyond the side edge portion (6, 6') of the core (2) is folded back beyond the side edge portion (6, 6') of the core (2) and is detachably fixed to the insulating plate.

7. An insulating plate according to claim 6, **characterized in that** the folded-back part (7) is fixed on the insulating plate by means of adhesive tape (10).

8. An insulating plate according to claim 7, **characterized in that** the adhesive tape is provided with an adhesive which can be pulled loose.

9. An insulating plate according to any one of the preceding claims, **characterized in that** the covering layer (3) is waterproof and vapor-permeable.

10. A method for manufacturing an insulating plate, comprising the steps of supplying a carrier web on a lower conveyor, spraying foaming material on the carrier web in a spraying station, directly after the spraying station, supplying a web of covering layer material between the foaming material and an upper conveyor, **characterized by** the step of taking measures for preventing adhesion between the covering layer material and the foaming material in a peripheral area of the web.

11. A method according to claim 10, **characterized in that** the prevention of adhesion between the covering layer material and the foaming material in a peripheral area of the web is effected by supplying, directly after the spraying station, a strip of protective material between the foaming material and the web of covering layer material.

12. A method according to claim 10 or 11, **characterized by** folding over the exposed covering layer material to above the plate, and subsequently finishing the exposed edge of the foaming material, with the exposed covering layer material in folded-over condition.

13. A method according to any one of claims 10-12, **characterized by** the step of applying a strip of adhesive material along the free edge of the covering material adjacent said peripheral area of the web, the adhesive material being disposed on the same surface of the covering layer material as the surface proximal to the protective layer material.

14. A method according to any one of claims 10-13, **characterized in that** the web of covering layer material, at least adjacent said peripheral area, is wider than the carrier web.

15. A method according to any one of claims 10-14, **characterized in that** the strip of adhesive material is applied while the covering layer material in said peripheral area has been folded over above the plate.

16. A method according to any one of claims 13-15, **characterized in that** the strip of adhesive material is covered with a detachable protective strip.

17. A method according to any one of claims 12-16, **characterized in that** finishing comprises the step of detachably adhering the folded-over part of the covering layer material onto the surface of the plate.

18. A method according to claim 17, **characterized in that** for the adhesion, detachable adhesive material is used.

19. A method according to any one of claims 10-18, **characterized in that** for the carrier web and the web of covering layer material a waterproof and vapor-permeable material is used.
